# EUROPEAN PATENT APPLICATION

(11) **EP 1 093 967 A2**
(43) Date of publication of application: **25.04.2001**
(21) Application number: 00110533.7
(22) Date of filing: 17.05.2000
(51) Int. Cl.: B60Q 3/02

(54) **A lighting unit for the passenger compartment of a motor vehicle**

(30) Priority: 19.10.1999 IT TO990908
(71) Applicant: FIAT AUTO S.p.A., 10135 Torino (IT)
(72) Inventor: Bianco, Guido, Via Dante Alighieri 4 (IT); Jansen, Peter, Via Piave 13/11 (IT)
(74) Representative: Eccetto, Mauro

(57) **Abstract**

A lighting unit for the passenger compartment (2) of a motor vehicle (1) with a roof panel (4) and a dashboard (5) supporting the instruments has a roof light fitting supporting at least one light source (8) for generating a first light beam (F1) directed towards the dashboard (5) and a second light source (10) for generating a second light beam (F2) for illuminating the interior of the passenger compartment.

## Description

The present invention relates to a lighting unit for the passenger compartment of a motor vehicle.

Usually, the passenger compartment of a motor vehicle is defined at the front by a dashboard supporting instruments which include a plurality of indicators relating to measuring instruments, such as speedometer, clock, a revolution counter, fuel level gauge and the like, along with a plurality of control devices for activating related auxiliary appliances such as screen demister, air conditioning, window winders and the like.

Over the past few years, the trend for illuminating each indicator and each control device with its own lighting system has got out of hand. Prior art lighting assemblies currently include light sources arranged in the dashboard or even inside each indicator or each control device. In particular, top of the range motor vehicles are equipped with lighting systems with a relatively large number of light sources.

In addition, the lighting assemblies of the passenger compartment of a motor vehicle generally include at least one light source for emitting a reading light beam for the front passenger, a reading light source for the rear passengers and a light source diffusing light around the passenger compartment.

It is clear from the above that, although they illuminate the instrument indicators effectively, these prior art motor vehicle lighting assemblies have the disadvantage of including a large number of light sources and thus a large number of wires, connectors and switches.

The result of this disadvantage is that prior art lighting assemblies are expensive, both because of their lengthy assembly times and because of the actual cost of the wires, light sources, connectors and other components.

The object of the present invention is to provide a lighting unit for the passenger compartment of a motor vehicle which is free of the aforesaid disadvantages and which, in particular, is inexpensive.

This object is achieved according to the present invention by providing a lighting unit for the passenger compartment of a motor vehicle which includes a roof panel and a dashboard, the lighting unit including at least one light source for generating a first light beam directed at the said dashboard and a second light source for generating a second light beam for illuminating the passenger compartment, the said first light source and the said second light source being supported by a ceiling light fitting.

The present invention will now be described with reference to the appended drawings, which illustrate one non-limitative embodiment thereof, in which:
Figure 1 is a side elevation view, with portions cut out for clarity, of a motor vehicle which includes a lighting unit according to the present invention;
Figure 2 is a plan view, seen from below, of the lighting unit of Figure 1; and
Figure 3 is a section of the unit of Figure 2, taken on the line III-III.

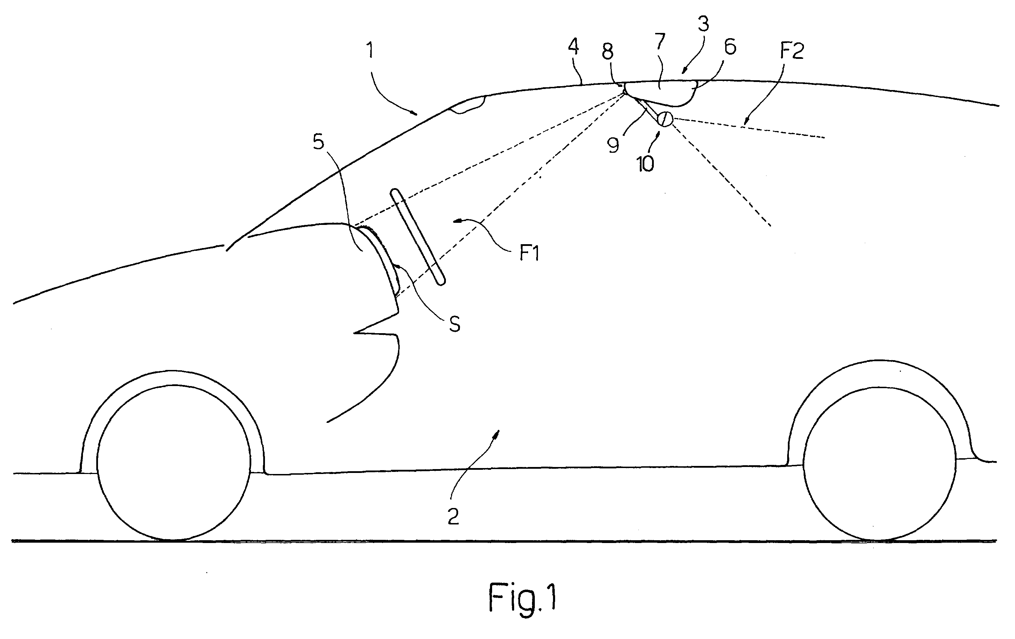

With reference to Figure 1, a motor vehicle is generally indicated 1.

The motor vehicle 1 includes a passenger compartment 2 and a lighting unit 3 for illuminating the passenger compartment.

The passenger compartment 2 is delimited at the top by a roof panel 4 and at the front by a dashboard 5 which supports instruments S which include a plurality of indicators, which are not shown and a plurality of control devices, which are not shown.

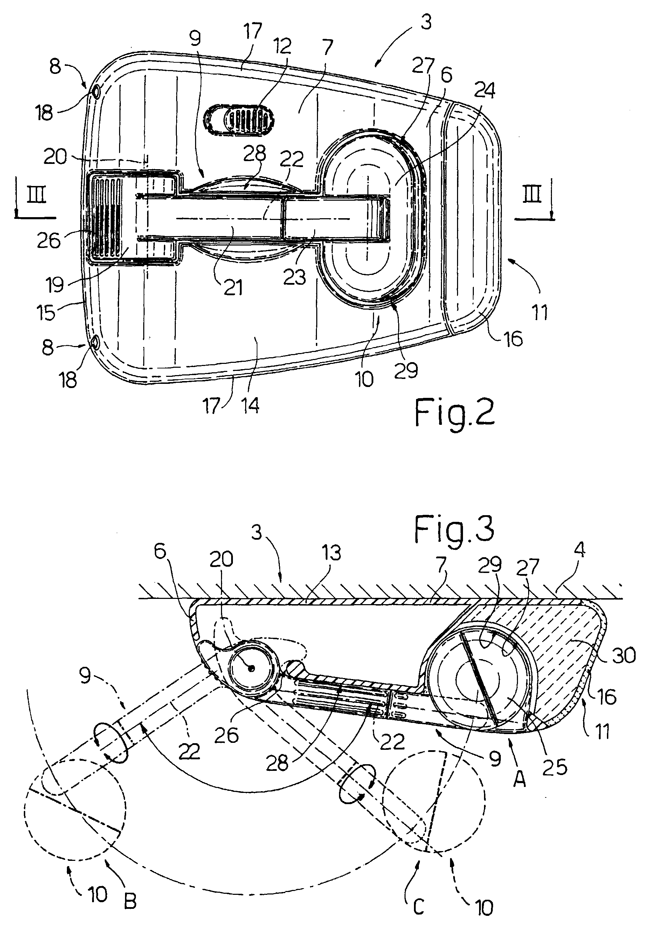

With reference to Figures 2 and 3, the unit 3 includes a roof light fitting 6 defined by a casing 7 which supports two light sources 8, an arm 9, an light source 10 arranged on the free end of the arm 9, a diffuser 11 and a switch 12. Seen in plan, the casing 7 is substantially the shape of an isosceles triangle facing the dashboard 5, and including a flat upper wall 13 secured to the roof panel 4 and a substantially flat lower wall 14 connected to the wall 13 by a curved front portion 15, a curved rear portion 16 and two curved side portions 17.

The light sources 8 consist of two respective light emitting diodes 18 arranged inside the casing 7 in the portion 15 and orientated so as to direct respective beams of light F1 (as shown in Figure 1) towards the dashboard 5 so as to illuminate the instruments S.

The arm 9 includes a boss 19 rotatable about a substantially horizontal axis 20, a portion 21, secured to the boss 19 and extending along an axis 22 perpendicular to the axis 20, and a portion 23 which extends along the axis 22 and is rotatable relative to the portion 21 about this axis 22 and is securely fixed to the light source 10 which can be turned either about the axis 20 or about the axis 22.

The light source 10 includes an opaque body 24 securely fixed to the end of the portion 23 and a transparent wall 25 coupled to the body 24.

The boss 19 is housed in a pocket formed in the portion 15 of the casing 7 and is rotatable about the axis 20 relative to the casing 7. The casing 7 also has a pocket 27 for the light source 10 and a pocket 28 for housing the arm 9. The pockets 27 and 28 are formed in the lower wall 14 and the pocket 28 extends between the pockets 26 and 27. In practice, the pocket 28 defines a housing 29 for the light source 10 and, along with the pockets 26 and 27, enables the whole arm 9 and associated hub 19 to be disposed in a rest position in which the boss 19, the arm 9 and the light source 10 are level with the wall 14. The rest position is indicated by a solid line in Figure 3 and indicated A.

The diffuser 11 is arranged inside the casing 7, between the pocket 27 and the portion 16 and includes a prism 30 for diffusing the light generated by the light source 10. The portion 16 and part of the surface of the pocket 27 are made of a transparent material so that the beam generated by the light source 10 passes through the pocket 27, the prism 30 and the portion 16 to direct a beam of diffuse light around the front portion of the compartment 2.

The switch 12 is arranged on the casing 7 and is operable to turn the light source 10 on and off. In a variant of this embodiment which is not illustrated, the switch 12 could be arranged in other regions of the compartment 2, on the dashboard 5, for example.

In use, the unit 3 operates as follows. With reference to Figure 1, the light emitting diodes 8 are activated when the headlights of the vehicle 1 are turned on and emit two respective light beams F1 for illuminating the dashboard 5 and the associated instruments not illustrated and the associated control devices, not illustrated.

With reference to Figure 3, the light source 10 is generally kept in the rest position A. The light source 10 is activated by opening or closing the doors, which are not illustrated, of the vehicle 1, thereby generating a beam of diffuse light as described earlier.

The light source 10 is also activated by the switch 12 whether it is in the rest position or an active position, these being indicated by broken lines in Figure 3 and indicated by the letters B and C.

In the position A, the light source 10 illuminates the front region of the passenger compartment, occupied by the driver and a passenger, with a beam F2. By rotating the light source 10 about the axis 22 it is possible to direct the light beam towards the driver's space or that of the passenger.

In the position C, the light source 10 illuminates the rear portion of the compartment, occupied by the backseat passengers, with a light beam F2. As in the previous case, rotation of the light source about the axis 22 makes it possible to select the rear area to be illuminated with the beam F2.

## Claims

1. A lighting unit for the passenger compartment (2) of a motor vehicle (1) which includes a roof panel (4) and a dashboard housing the instruments (S), this lighting unit including at least one light source (8) for generating a first light beam (F1) directed towards the said dashboard (5) and a second light source (10) for generating a second light beam (F2) for illuminating the passenger compartment (2), in which the said first light source (8) and the said second light source (10) are supported by a roof light fitting (6).

2. A unit according to Claim 1, characterised in that the said second light source (10) is movable relative to the said roof light fitting (6) so that the said second light beam (F2) can be orientated within the said compartment (2).

3. A unit according to Claim 1, characterised in that the said roof light fitting (6) is fixed to the roof panel (4) of the motor vehicle.

4. A unit according to Claim 1, characterised in that the said roof light fitting (6) includes a casing (7) and an arm (9) pivoted on the said casing (7), the said at least one light source (8) being arranged inside the said casing (7) and the said second light source (10) being arranged on the said pivoted arm (9).

5. A unit according to Claim 4, characterised in that the said arm (9) is movable relative to the said casing (7) between a plurality of operating positions (B, C) and a rest position (A).

6. A unit according to Claim 5, characterised in that the said arm (9) is rotatable relative to the said casing (7) about a first axis (20) and has first and second portions (21, 23) rotatable relative to each other about a second axis (22) perpendicular to the said first axis (20), the said second light source (10) being rotatable about the first and second axes (20, 22).

7. A unit according to Claim 5, characterised in that the said casing (7) has a housing (20) for the said second light source (10) when it is in its said rest position (A).

8. A unit according to Claim 7, characterised in that the said housing (29) is defined by a pocket (27) formed in the said casing (7).

9. A unit according to any one of the preceding Claims, characterised in that the said roof light fitting (6) includes a diffuser (11) for directing the beam from the said second light source (10), when the said second light source (10) is in the said rest position (A).

10. A unit according to Claims 8 and 9, characterised in that the said diffuser (11) is arranged in the said casing (7) at the site of the said pocket (27).

11. A unit according to Claim 10, characterised in that the said pocket (27) is at least in part transparent, the said diffuser (11) including a prism (30) arranged at the site of the said pocket (27).
